Europäisches Patentamt

European Patent Office

Office européen des brevets

(11) Publication number: **0 233 451**
A2

# EUROPEAN PATENT APPLICATION

(21) Application number: 87100119.4

(22) Date of filing: 07.01.87

(51) Int. Cl.³: **H 02 K 3/00**
H 02 K 1/00

(30) Priority: 08.01.86 CN 86100239
30.08.86 CN 86105405

(43) Date of publication of application:
26.08.87 Bulletin 87/35

(84) Designated Contracting States:
AT BE CH DE FR GB IT LI NL SE

(71) Applicant: South China Institute of Technology
Wu Shan Tian He District
Guang Zhou(CN)

(72) Inventor: Chen, Duan-bao
Wu Shan, Tian He District
Guang Zhou(CN)

(74) Representative: Ebbinghaus, Dieter et al,
v. FÜNER, EBBINGHAUS, FINCK Patentanwälte European
Patent Attorneys Mariahilfplatz 2 & 3
D-8000 München 90(DE)

(54) Strip steel electric machine with an electric circuit and a magnetic circuit mixed as a whole.

(57) This invention discloses a strip steel electric machine with an electric circuit and a magnetic circuit mixed as a whole (including electric motor and generator). This invention also discloses a specially high efficiency strip steel electric machine with an electric circuit and a magnetic circuit mixed as a whole (the efficiency is higher than that of the traditional electric machine by 5%).

The main point of the invention is that the electric machine is wound with an electrically pure iron strip coated with an insulating paint. The strip is not only an electrically-conducting winding, but also a magnetically-conducting iron core in the electric machine. In comparison with the traditional electric machine, this invention has advantages such as small in volume, large in capacity, high in efficiency, far stronger in overload capacity in a short time, longer service life of the electric machine etc. This invention also eliminates a set of drawbacks such as additional torque, noise, Carter's coefficient in the air gap, the stray copper losses and stray iron losses etc. formed by the tooth harmonics in the traditional electric machine. When the efficiency is not a specially high one, the electric machine does not waste copper material.

EP 0 233 451 A2

./...

FIG. 1

V. FÜNER        EBBINGHAUS        FINCK
PATENTANWÄLTE        EUROPEAN PATENT ATTORNEYS
MARIAHILFPLATZ 2 & 3, MÜNCHEN 90
POSTADRESSE: POSTFACH 95 01 60, D-8000 MÜNCHEN 95

0233451

1

South China Institute
of Technology

EP 87 100 119.4
EPAB-34567.5
January 7, 1987        Ks

STRIP STEEL ELECTRIC MACHINE WITH AN ELECTRIC CIRCUIT
AND A MAGNETIC CIRCUIT MIXED AS A WHOLE

This invention relates to an electric machine, and particularly to an electric machine with an electric circuit and a magnetic circuit mixed as a whole.

Up to now the traditional electric machine has a history of nearly one hundred years. Its common feature is that the electrically conducting windings and the magnetically conducting iron core are divided into two separate bodies. Therefore, slots should be provided at the inner circle of the stator to put windings in, and the end parts of the windings are ineffective parts which do not take part in doing work. The whole inner circular area including the end parts of windings which could be used to produce an air gap magnetic field for taking part in doing work is generally not over 1/4. So, the development of the performance of the traditional electric machine is greatly limited, and the efficiency is also lower. A series of disadvantages such as additional torque, noise, Carter's coefficient of the air gap, especially the stray copper losses and the stray iron losses etc. are formed due to tooth harmonics.

In order to overcome the above-mentioned disadvantages of the traditional electric machine, an object of the invention is to provide a strip steel electric machine, which has no slots in the whole inner and outer circular surface

- 2 -                                    0233451

of the stator and the rotor according to the principle of the strip steel electric machine with an electric circuit and a magnetic circuit mixed as a whole.

An object of the invention still lies on providing a strip steel machine wherein the whole air gap area including the end parts of windings could produce effective magnetic field in the air gap, so that the traditional electric machine could be replaced.

A further object of the invention is that when the strip steel electric machine is an induction motor, a squirrel-cage or a wire-wound strip steel rotor comprising iron segments which conduct not only electricity but also magnetism is provided for the stator wound by strip steel coils.

A further object of the invention is that when the strip steel electric machine is a generator, a rotor in the type of rare-earth cobalt permanent magnet or strip steel coil (magnetic field excited by electric current) with an electric circuit and a magnetic circuit mixed as a whole is provided for the stator wound by strip steel coils.

A further object of the invention is to provide a strip steel electric machine with an electric circuit and a magnetic circuit mixed as a whole with specially high efficiency.

An electric machine provided by the invention is characterized in that the winding of said electric machine is wound by the strip steel, and said windings are not only electrically-conducting windings but also a magnetically-conducting iron core.

An embodiment of the elecctric machine provided by the invention is that the stator comprises a plurality of half-turn strip steel coils with substantially identical shape
and dimension, the bottom of the said strip steel coil
being arranged in order along the inner cylindrical surface
of the stator and laminated, said coils are being
and solidified by resin to form a hollow stator cylinder.

Another embodiment of the electric machine provided by the
invention is that the half-turn strip steel coil is a strip
steel coil having a two-layer end part.

Another embodiment of the electric machine provided by the
invention is that the half-turn strip steel coil is a strip
steel coil having a three-layer end part.

When the electric machine is a squirrel-cage induction
electric motor, an embodiment of the rotor comprises a yoke
portion formed by a plurality of ring iron segments passing
into the rotational axle of the motor;  a hollow cylindrical portion formed by the iron segments, the cross-section
of which is substantially trapezoidal, is arranged along
the axial direction on the outer cylindrical surface of
the yoke portion and laminated in the circumferal direction, and two end ring portions are located at two ends of
the hollow cylinder for forming a good electrical conduction between the trapezoidal iron segments.

When the electric machine is a generator, an embodiment of
the rotor is of the type of rare-earth cobalt permanent
magent.

An electric machine having specially high efficiency provided according to the invention is a strip steel electric
machine with a surface of the strip steel coated by a good
conduction metal layer.

- 4 -

The advantages of electrical machines according to the invention are such as small in volume, large in capacity, high in efficiency, strong in the overload capacity in a short time, and far longer in the service life. The electric machine according to the invention also eliminates a series of disadvantages such as the additional torque, noise, Carter's coefficient of the air gap, especially the stray copper and iron losses etc., and may not waste copper material.

In the following, preferred embodiments will be described in details, in accompanying with the drawings, in which:

Figure 1 shows schematically the half-turn strip steel coil with two-layer end part,

Figure 2 shows schematically the structure and the connection of the two half-turn strip steel coils with two-layer end part departed about one pole pitch,

Figure 3 shows schematically the connection of the strip steel coils of the stator of the strip steel electric machine with a two-layer end part connected in three phases and four poles,

Figure 4 shows schematically the equivalent circuit of the connection circuit for B phase in the Figure 3,

Figure 5 shows schematically the practical arrangement of the stator windings of the strip steel electric machine with two-layer end part,

Figure 6 shows schematically the path of the main magnetic flux, passing through the main air gap into the strip steel rotor, of the stator of the strip steel electric machine with two-layer end part,

Figure 7 shows schematically the structure of the squirrel-cage strip steel rotor of the strip-steel electric machine, in which, Figure 7 (a)
is a view in the axial direction and Figure
7 (b) is a side view,

Figure 8   shows schematically the connection of the circuit of the strip steel coil of the simulated
strip steel model machine with single-layer end
part in three phases and four poles,

Figure 9   shows the T-type equivalent circuit of the
model machine example (in the figure the parameters are normalized),

Figure 10  shows schematically the half-turn strip steel
coil with a three-layer end part,

Figure 11  shows schematically the structure and the connection of the three half-turn strip steel
coils with the three-layer end part departed
about one pole pitch,

Figure 12  shows schematically the connection of the circuit
of the strip steel coil of the stator windings
of the strip steel electric machine with the
three-layer end part in three phases and four
poles,

Figure 13  shows the equivalent circuit of the connection
circuit of the B phase in the Figure 12,

Figure 14  shows schematically the practical arrangement
of the stator windings of the strip steel electric machine with a three-layer end part,

Figure 15  shows schematically the path of the main magnetic flux, passing through the main air gap
into the strip steel rotor, of the stator of
the strip steel electric machine with a three-
layer end part in side view,

Figure 16  shows schematically the path of the main magnetic flux, passing through the main air gap
into the strip steel rotor, of the stator of
the strip steel electric machine with a three-
layer end part in top view,

Figure 17    shows schematically the structure of a squirrel-cage strip steel rotor with three-layer
end part, wherein Fig. 17 (a) is a view in the
axial direction, and Fig. 17 (b) is a side view.

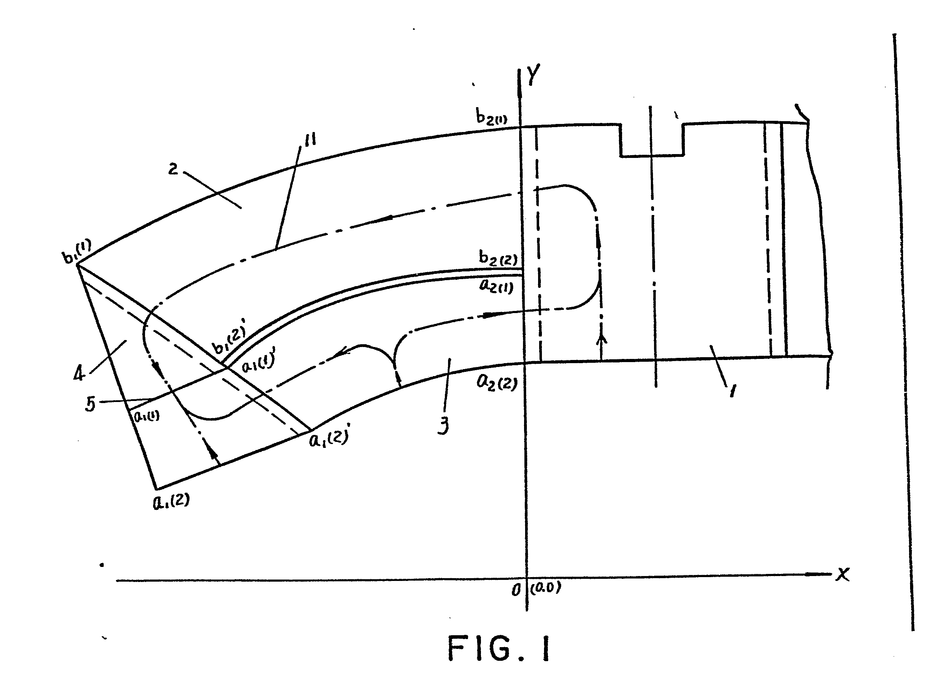

Referring to Fig. 1-5 in the first embodiment according
to the invention, the stator of the strip steel electric
machine (including electric motor and generator) with a
two-layer end part comprises a plurality of half-turn
strip steel coils with substantially identical shape and
dimension. The bottom of the strip steel should be able
to be attached closely to the surface of an art cylinder,
the diameter of which is greater than that of the rotor by
twice the air gap (i.e. 28). Coils are arranged in order
and laminated and provided with a positioning ring band
for installation, and then cast and solidified with epoxy
resin to form a hollow stator cylinder (the surface of its
inner circle is smooth and without slots).

Figure 1 is a schematic drawing of the half-turn strip
steel coil. Because of symmetry, the right half part from
the center line is partially omitted. The linear part 1 is
a single layer, and two end parts have two layers. The upper layer end part thereof is bent to a direction with  a
slant; and the lower layer end part thereof is bent to the
other direction with a slant. The lower edge of the lower
layer end part should be able to bend along the above mentioned art cylinder. The heads of the upper layer end
part 2 ($b_{1(1)}$  $b_{2(1)}$ and $b_{1(2)}$, $b_{2(2)}$ are elliptical lines)
and the lower layer end part 3 ($a_{1(1)}$, $a_{2(1)}$ and
$a_{1(2)}$, $a_{2(2)}$ are elliptical lines) are provided with
upper and lower connection segments respectively. Every
pair of these upper and lower connection segments form a
triangle segment 4 when they are put together. Every pair
of the connection segments are bent to form a certain
angle with the end parts and are laid within the radial plane of the electric machine respectively in order to meet with the corresponding end part. In the middle part of the triangle segment (i.e. at line $\overline{a_{1(1)} \; a_{1(1)'}}$ ) a narrow pure iron welding thin segment 5 on the bottom of the connection segment of the upper layer end parts may be provided for the connection of coils in series with each other successively through welding (preferably supersonic stitch welding) according to the connection method in Figure 3 to form the three-phase windings of the whole strip steel stator.

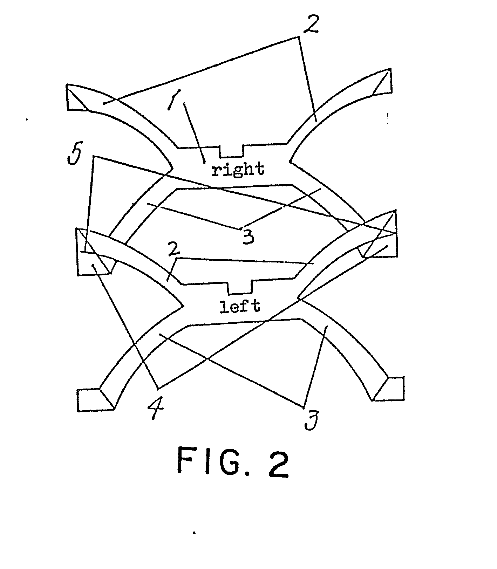

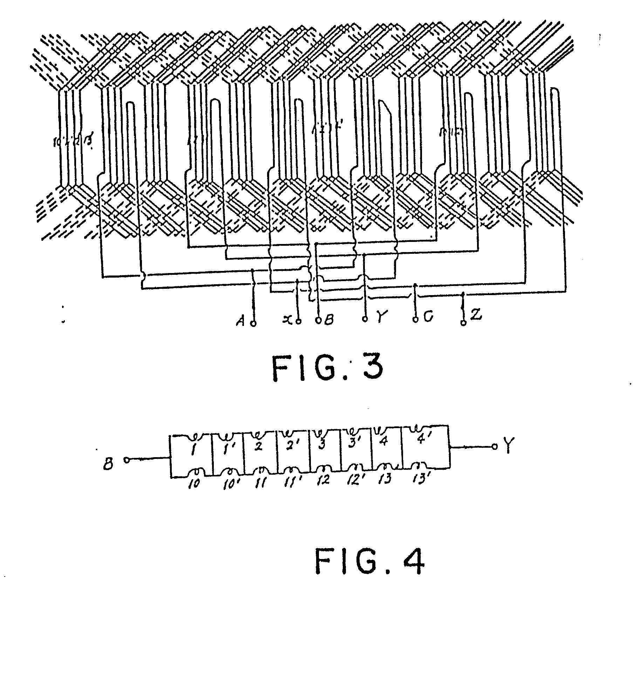

Figure 2 shows schematically the structure and the series connection of half-turn strip steel coils with two-layer end part departing about a pole pitch through welding. In the figure, there are two half-turn strip steel coils. The lower layer end parts 3 of the half-turn strip steel coil in the right side are bent to the left, and the upper layer end parts 2 of the half-turn strip steel coil in the left are bent to the right.

These end parts meet with each other through respective head connection segments, and are welded together in stitch welding by narrow pure iron welding thin segments 5. In the same way, the upper layer end parts 2 of the half-turn strip steel coil in the right side are bent to the right, and the lower end parts 3 of the half-turn strip steel coil in the left side are bent to the left. Their respective head connection segments meet with the head connection segments of corresponding end parts, and they are welded together in the stitch welding by the same method continually.

Figure 3 shows the connection of the circuit of the winding of the whole strip steel stator with a two-layer end part in three phases and four poles. Figure 4 shows the equivalent circuit of the connection circuit of phase B

in the Figure 3. In the Figure 3, in the end windings the end parts of the lower layer are incidated with dotted lines, and the end parts of the upper layer are indicated with real lines extended to the other direction. The connection method of the circuit formed by the linear parts and the end parts of the upper layer and the lower layer may be considered roughly as the connection method of the two-layer rod windings of the stator of the traditional electric machine. The sole differences is that the linear part of the strip steel electric machine is a whole body, but the linear parts of the two-layer rod windings are separated to the upper layer and the lower layer insulated from each other and connected with the corresponding end part of the upper layer and the lower layer, respectively. When the equivalent circuits of any phase, e.g. the B-Y phase of the three phases in the traditional electric machine and the strip steel electric machine according to the invention are analysed, the difference which could be seen is that the upper and the lower layer windings in the former one form two independent branches without any connection between them, and it is equivalent that a lot of equi-potential connection wires exist between two branches formed by the latter one, i.e. the circuits of the upper layer and the lower layer formed by the half-turn strip steel coils are connected by their linear parts.

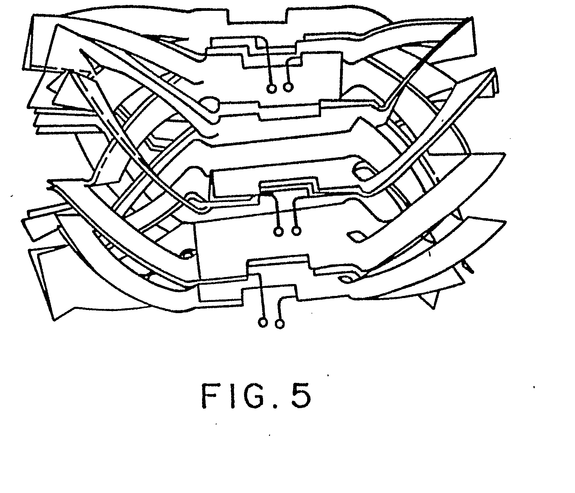

Figure 5 shows schematically the practical arrangement of the stator windings of the strip steel electric machine with a two-layer end part. In the figure, a groove is provided at the top in the middle part of the linear part of the half-turn strip steel coil. The groove is used for the arrangement of a positioning ring band of the linear part (not shown) to assure that the linear parts could be attached closely to the surface of the art cylinder, and then the stator is cast with the epoxy resin to form a hollow stator cylinder. The groove can also be used as the leading position for the three phase leading wires of the stator windings of the strip steel electric machine. Furthermore, thin insulating sleeves (not shown) may be sleeved between the upper layer and the lower layer of the two end parts. The sleeves could be used for isolation and insulation in the one hand, in the other important hand, the sleeves could be used as positioning ring bands in the end parts to assure that the end parts of the lower layer be attached closely to the surface of the art cylinder for casting to a cylinder of the stator by the epoxy resin. These ring bands are a key to assuring the main air gap of the strip steel electric machine for good operation performances. The positioning ring band of the linear part and the insulating sleeves are made of insulating material (preferably plastic). The cylinder consisted by the strip steel stator segments including paint layers should have a lamination factor as high as possible. The cross-section of the half-turn strip steel coil with a two-layer end part in every portion should have a shape required by its location in the stator cylinder. The coil is moulded according to said shape of the cross-section. The cross-section is substantially a trapezoidal cross-section. The farther the distance to the rotational axis is, the thicker is the half-turn strip steel coil and vice versa. The material of the half-turn strip steel coil is, for example, an electrically pure iron. Before the installation, the half-turn strip steel coil may be treated by a magnetic annealing in a vacuum or in a protective gas, then coated with the paint by the electrophoresis.

Although the resitivity of the electrically pure iron is greater than that of the copper by 7-8 times, owing to the fact that the cross-section area of the pure iron for conduction is increased greatly, the difference between the strip-steel and the copper wire in phase resistance at industrial frequency is not great. It should be noticed that its industrial frequency skin effect is far greater than that of copper wire, therefore, its effective resistivity must be considered. The data obtained from a real measurement of a simulated strip steel model machine and a single strip steel coil element indicate that the effective resistivity is about 1.8. Nevertheless, due to that the big increase in the capacity of the strip steel electric machine depends upon the increase of the magnetic field in the air gap (equivalent to the increase of voltage, not depending on the increase of the electric current is the physical essential), therefore relatively, the total copper losses of stator of the strip steel electric machine is lower than that of the traditional electric machine with same capacity.

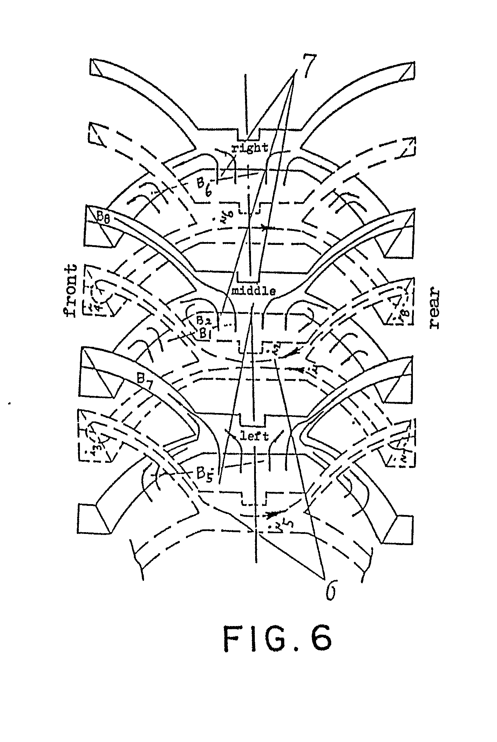

The key point of the strip steel electric machine lies upon the design of the magnetic circuit. Referring to Figure 6, Figure 6 schematically shows the path of the main magnetic flux of the stator of the strip steel electric machine with a two-layer end part passing through the main air gap to the strip steel rotor. This figure is a side view of the strip steel stator. In the figure only two sets of the adjacent strip steel coils are shown. In each set there are three half-turn strip steel coils departing for about one pole pitch connected in series with each other successively, wherein a set in real lines is used to indicate the main magnetic circuit of strip steel stator, and a set in dotted lines is used to indicate the current loop of the strip steel stator. In Figure 6, under each upper layer end part of the strip steel coil (real line) passes an adjacent another lower layer end part of the strip steel coil (dotted line) which carries current. The travel and the direction of the current carrying loop are $i_1$ $i_3$ $i_5$ $i_7$ and $i_2$ $i_4$ $i_6$ $i_8$. According to the right hand rule, the main magnetic circuit of the middle half-turn strip steel coil (real line) should be a pair of parallel magnetic circuits with the front half part and the rear half part symmetric to and divided by the middle line of the linear part of the half-turn strip steel coil.

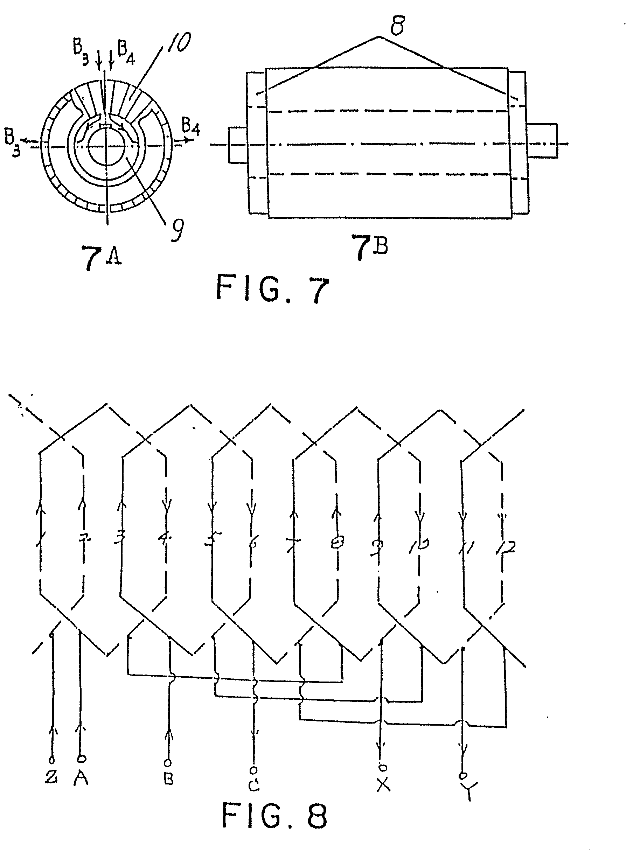

Therefore, it is possible to describe only its front half part as an example. After the main magnetic flux from the linear part and the lower layer end part of the front half part of the middle half-turn strip steel coil passes through the air gap into the rotor of the strip steel electric machine, the flux is divided into two branches (left and right) in the strip steel rotor, travels across one pole pitch, passes through the main air gap again, and enters into the linear part and the lower layer end part of the front half part of the left half-turn and right half-turn strip steel coil of the stator, respectively. For the left branch, flux passes from the linear part and the lower layer end part of the front half part of the left half-turn strip steel coil through its upper layer end part coil into the lower layer end part and the linear part of the front half part of the middle half-turn strip steel coil to form a closed main magnetic circuit. The travel and direction of the closed magnetic circuit of the main magnetic flux is $B_1$ $B_3$ $B_5$ $B_7$ $B_1$ ($B_3$ is in the strip steel rotor in Fig.7). For the right branch, flux passes from the linear part and the lower layer end part of the front half part of the right half-turn coil through its lower layer end part coil into the upper layer end part coil of the front half part of the middle half-turn strip steel coil, and enters continually into the linear part and the lower layer end part coil of the front half part of the middle half-turn strip steel coil to form a closed main magnetic circuit. The travel and the direction of the closed magnetic circuit of the main iron magnetic flux is $B_2$ $B_4$ $B_6$ $B_8$ $B_2$ ($B_4$ is in the strip steel rotor in Fig. 7).

From the point of view of the physical essential, when the main magnetic circuit is examined, it is noticed that the main flux linked by the windings in each phase is one half of the main magnetic flux in the air gap.

According to a reasonable distribution of the whole iron magnetic circuit of the strip steel stator with two-layer end part, every portion should satisfy with the following design ideas of the main magnetic circuit and corresponding set of design formulas for check and calculation of the magnetic circuit to assure providing a reasonable iron magnetic path of the main magnetic flux.

(1)   The air gap magnetic flux density $B_\delta$ passing in and out the lower layer end part (tooth) should be able to pass through the assembly for passing in and out at the lower layer end part according to the predetermined magnetic flux density $B_{a0}$ (the height $h_a$ at that place, i.e. $\overline{a_{2(1)} \; a_{2(2)}}$ in Fig. 1 to be determined).

(2)   The magnetic flux at the assembly of the linear part for passing in and out the upper layer end part should be able to pass through that place with the predetermined magnetic flux density $B_{0b}$ (the axial length at that place $1_0$ i.e. half length of the linear part in Fig. 1 to be determined).

(3)   The magnetic flux passing in and out the upper layer end part (yoke) should be able to pass though that place with the predetermined magnetic flux density $B_b$ ($B_b = B_{0b}$) (the height $h_b$ at that place  i.e. $\overline{b_{2(1)} \; b_{2(2)}}$ in Fig. 1 to be determined ).

Let  $B_\delta$, $B_{a0}$, $B_b = B_{0b}$, the design inner diameter $R_{i1}$ of the strip steel stator, the lamination factor $K_{Fe1}$ between strip steel segments of the stator, main magnetic flux wave amplitude coefficient $F_s$ etc. are the predetermined parameters determined before design, a set of design formulas (after slightly simplified) complying with the above-mentioned design ideas is obtained as follows:

$$\sqrt{2} \cdot (R_{i1} + h_a + h_b + 2)\cdot R_{i1}\cdot B_\delta = (2R_{i1} + h_a)\cdot h_a\cdot 2F_s\cdot K_{Fei}B_{a0} \quad\ldots\ldots\ 1$$

$$[1_0 + \frac{\sqrt{2}}{2}\cdot (R_{i1} + h_a + h_b + 2)]\cdot R_{i1}\cdot B_\delta = (R_{i1} + h_a)\cdot 1_0\cdot 2F_s\cdot K_{Fei}B_{a0} \quad\ldots\ 2$$

$$2\sqrt{2}\ (R_{i1} + h_a)\cdot 1_0 = (2R_{i1} + 2h_a + h_b + 4)\cdot h_b \quad\ldots\ldots\ldots\ldots\ldots\ldots\ 3$$

When the strip steel electric machine with a two-layer end part is an electric motor, its stator remains the same as the above-mentioned stator, its strip steel rotor may also be made with pure iron segments with the electric conduction and the magnetic conduction mixed as a whole, as shown in Fig. 7. In the figure, $B_3$ and $B_4$ are the main iron magnetic flux passing through the strip steel rotor. The yoke portion of the rotor 9 is laminated by a plurality of thin pure iron segments punched in the shape of a circular ring with the hole at the center for passing into the rotational axle. The outer circle of the cylindrical ring is welded with the inner circle of a hollow cylinder formed by a plurality of pure iron long segments 10 having a certain height and with a trapezoidal cross-section. These segments are arranged along the axial direction and laminated in the circumferal direction in a relative high lamination factor. A welding, e.g. braze welding, is adopted, but the permeability of the welding material should be near to that of the original pure iron segment. The extension portions of the long strip trapezoidal segments at two ends form two end parts of the cylinder, then they are welded by copper fusion welding to form two end rings 8. Then the whole strip steel rotor is treated with vacuum epoxy casting and solidifying, and finished by the lathe with the dimension of the outer circle as required, whereupon the surface of the outer circle is treated by electro- phoretic coating again. The total length of the effective portion of the rotor of the strip steel motor (except of the end rings) in axial direction is identical to the total length of the stator windings (including the end windings) and along this length the length of the air gap between the whole stator and the rotor are equal. The thickness of the trapezoidal iron segment 10 is very thin. In Figure 7 the thickness of the trapezoidal iron segment is enlarged for showing clearly.

The cross-section of the long strip trapezoidal segments and the yoke segments of the rotor should be checked and calculated for a sufficiently good performance in electric conduction and magnetic conduction. Furthermore, before the assemblage of the electrically pure iron segments these segments may be treated by a magnetic bright annealing. Obviously, the motor may also adopt a wire-wound strip steel rotor with an electric circuit and a magnetic circuit mixed as a whole.

When the strip steel electric machine is a generator, the stator remains the same as that in the motor, the rotor may use a rotor with rare-earth cobalt magnet (permanent magnetic pole type). The total length of the rare-earth cobalt magnetic pole rotor in axial direction may be identical to the total length of the strip strip steel stator (including end windings), and the distribution of the air gap between the whole stator and the rotor along this total length is the same. Obviously, the generator may also adopt a strip steel coil magnetic pole (magnetic field excited by direct current) rotor.

A simulated strip steel electric machine was made by the inventor for test and proof of the principle of the strip steel electric machine according to the invention, the half-turn strip steel coil of the stator of the simulated model machine has single layer end part. The whole stator is constructed by two kinds of the half-turn strip steel coils in different shape, wherein one-half of the coils only have an upper layer end part (without lower layer end part), and the other half of the coils only have a lower layer end part (without upper layer end part). The three phase connection of the stator is shown in Figure 8. Although the simulated strip steel model machine with a single layer end part is different from the strip steel electric machine with a multiple layer end part according to the invention in form, they are basically same in the principle of the production of the main magnetic flux, only the range of the effective air gap magnetic field produced by the latter is greater than that produced by the former, i.e. the windings in the end parts can also produce an effective air gap magnetic field, this can be determined by the well-known right hand rule only, and this needn't be proved by test.

In the test a squirrel-cage rotor of the traditional asynchronous motor type without casting aluminium is used only for providing the iron magnetic loop of the main magnetic circuit of the strip steel stator.

The simulated strip steel model machine is designed basically by reference to the traditional electric motor $JO_2$-41-4. Every strip steel coil element is wound by 44 turns. Every phase consists of 6 strip steel coil elements. The average inner diameter of the stator core is about 146,38 mm (because the inner circle of the stator was not finished by the lathe at last, and stator was only bound on an art cylinder with its outer diameter being 146,08 mm and cast and solidified by the epoxy resin) the outer diameter of the stator is 233 mm, the axial length of the whole stator is 300 mm, wherein the length of the effective portion therein (i.e. linear part) and the rotor all are 102 mm. The outer diameter of the rotor is 145,38 mm, so the average length of the main air gap is about 0,5 mm (the standard length of the air gap consulted is about 0,35 mm).

Furthermore, a simulated single hollow strip steel coil element is made by the inventor, it is a hollow cylinder wound by the electrically pure iron strip (0,3 x 60 mm²) with an insulating layer for 56 turns, the inner diameter of the cylinder is 220 mm, the outer diameter of the cylinder is 275 mm.

The results for the measurement of the simulated strip steel model machine are as follows (for comparison, the measured values are normalized at last according to the traditional $JO_2$-41-4 type electric machine):

In the connection mode shown in the Figure 8, a 220 V phase voltage is input to each phase, the measured exciting current $I_0$ = 2,85A, the normalized value $\overline{I}_0$ = 0,47. The standard normalized value consulted is 0,27. The reason why the real measured value is higher lies in the fact that the real main air gap (0,5 mm) is greater than the standard air gap (0,35 mm). According to experience data of the test of the traditional middle and small asynchronous motor, it is proved that when the practical air gap is greater than the standard value for 30 %, the exciting current $\overline{I}_0$ will increase about 100 %. According to this, it is believed that the main magnetic circuit of the simulated strip steel model machine is tenable.

According to the real measurement of the simulated strip steel model machine, the resistivity of the electrically pure iron in the cold state $\rho_{13,7°C}$ = 0,126Ω·m. Consulting the Electric Engineering Handbook, the temperature coefficient of the resistivity is 0,0063, so that the conversion coefficient for converting the resistance in the cold state to the resistance in the standard temperature (75°C) may be calculated as $K_{15°C}$ = 1.38. Also, the effective resistivity of the electrically pure iron strip at the industrial frequency measured is about $K_A$ = 1.85.

The phase leakage reactance of the stator of the simulated strip steel model machine (a key parameter) is measured (by the method of drawing the rotor out) as $X_1$ = 3.97 Ω, its normalized value is $\overline{X}_1$ = 0.043. According to the calculation method of the leakage reactance (drawing rotor out) $X_1$ = 3.6 Ω is calculated (identical with the real measured value basically); its normalized value is $\overline{X}_1$ = 0.04. The standard normalized value consulted should be $\overline{X}_1$=0.062.

Then the single hollow strip steel coil element is measured again (converting the measured value to phase leakage reactance in the simulated strip steel model machine, and converting them into the normalized value according to traditional $JO_2$-41-4 type electric machine at last). The results obtained are as follows:

The real measured resistivity of the electrically pure iron in the cold state is $\rho_{23°C}$ = 0.128Ω·m. And the real measured effective resistance coefficient of the electrically pure iron strip at the industrial frequency is about $K_A$ = 1.75.

The real measured value of the leakage reactance of the single hollow strip steel coil element (a key parameter) is 0.9 Ω. According to the calculation method of the leakage reactance the calculated value $X_1$ = 0.92 Ω is obtained (identical to the real measured value basically). The real measured value is converted into the indirect real measured value of the phase leakage reactance of the stator in the simulated strip steel model machine $X_1$ = 4.24 Ω

(also basically identical to the above direct real measured value $X_1$ = 3.97 $\Omega$), and the indirect real measured normalized value is $\overline{X}_1$ = 0.046 (basically identical to the above direct real measured normalized value $\overline{X}_1$ = 0.043).

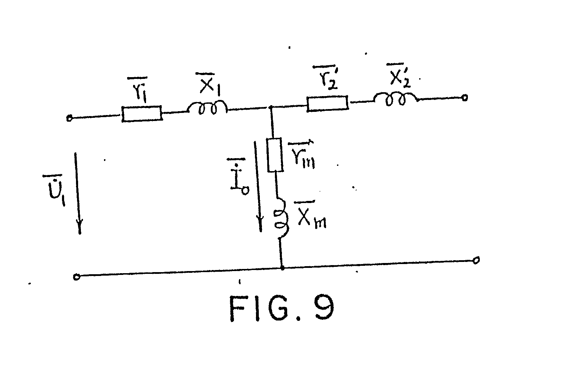

In the embodiment of the strip steel electric machine according to the invention, the parameters in the T-Type equivalent electric circuit (Fig. 9) may be obtained according to the above-mentioned simulated real measured value and the formulas already tested and proved by the fact (including the calculation formulas of the magnetic circuit, especially the calculation formulas of the leakage reactance).

Furthermore, although the real measured resistivity and the effective resistance coefficient at industrial frequency of the electrically pure iron strip in the embodiment are greater, the cross section of the strip steel coil of the strip steel electric machine according to the invention is even greater than that of the copper wire in the traditional electric machine with same capacity, so that they have little influence on the high efficiency and the good performance for the temperature rise and heat dissipation etc. in the strip steel electric machine according to the invention.

The performance of the strip steel electric machine with two-layer end part according to the invention will be embodied by the following embodiment (a model machine).

The model machine is designed in comparison with the traditional electric machine $JO_2$-62-4 (17KW). The strip steel stator with a two-layer end part has its windings connected in three phase and four poles and 4Y (number of the branches in parallel a = 4). The whole stator consists of 18 strip steel coil elements. Under each pair of the poles three coil elements are connected in series for each phase (connected into a pair of parallel branches), 4 parallel branches for each phase are formed by the method of the parallel connection between two pairs of poles. The number of turns of the series-connected strip steel coil for each branch in each phase is $W_1$ = 78 turns.

The predetermined parameters selected according to a reasonable distribution of the whole iron magnetic circuit of the strip steel stator with two-layer end part are:

$R_{i1}$ = 68 mm, $K_{Fe1}$ = 0.8, $F_s$ = 1.3, $B_\delta$ = 11000 gauss, $B_b$ = $B_{0b}$ = 14500 gauss, $B_{a0}$ = 18000 gauss.

After substituting the above predetermined parameters into the design formulas, the solutions (approximate solutions) are:

$h_a$ = 26 mm, $h_b$ = 45 mm, $1_0$ = 42 mm are obtained.

Figure 1 shows schematically the half-turn strip steel coil.

The main dimension of the model machine and the traditional $JO_2$-62-4 type electric motor are listed for comparison as follows:

| type of machine | capacity (KW) | outer diam. of stator core $D_a$ (mm) | effective length of core (incl. end parts windings) L(mm) | inner dia. of stator core $D_{i1}$ (mm) | length of air gap $\delta$ (mm) |
|---|---|---|---|---|---|
| model machine | 17 | ∅ 282 | 284 | ∅ 136 | 0.4 |
| $JO_2$-62-4 | 17 | ∅ 280 | 320 | ∅ 182 | 0.45 |

The main materials wasted are also listed as follows:

| main material wasted | $JO_2$-62-4 | model machine | specially high effective model machine |
|---|---|---|---|
| copper (kg) | 8.75 | 0 | 5 |
| iron (kg) | 112 | 110 | 110 |

The parameters of the T-type equivalent electric circuit of the model machine (shown in Figure 9, in the figure parameters are all normalized) are as follows:

(1). $\bar{r}_1$ : $\bar{r}_1$ = 0.03 is calculated in the model machine according to the simulated real measured value.

(2). $\overline{r_2}'$ : $\overline{r_2}'$ = 0.02 is calculated in the model machine according to the simulated real measured value with $K_A$= 1 (because the rotor has no skin effect).

(3). $\bar{X}_1$ : $\bar{X}_1$ = 0.032 is calculated in the model machine according to calculation formula of the leakage reactance tested and proved by the simulated real measurement.

(4). $\overline{X_2}'$ : $\overline{X_2}'$ = 0.161 is calculated in the model machine according to the calculation formula of the leakage reactance tested and proved by simulated real measurement (the leakage condition of the magnetic flux for the strip steel rotor and the rotor of the traditional $JO_2$ type motor are substantially the same).

(5). $\bar{I}_0$ : $\bar{I}_0$ = 0.4 is calculated in the model machine according to the calculation formula of the magnetic circuit tested and proved by the simulated real measurement.

(6). $\bar{X}_m$ : $\bar{X}_m = \dfrac{1}{\bar{I}_0}$ = 2.5

(7). $\bar{r}_m$ : the iron losses of the stator $\bar{P}_{Fe}$ = 0.02 are calculated in the model machine according to the claculation method of the conventional iron losses (its correctness has been proved by the practice in long terms).

so $\bar{r}_m = \dfrac{\bar{P}_{Fe}}{\bar{I}_0{}^2}$ = 0.125

For comparison, the parameters (normalized value) of the T-type equivalent circuit and the magnetic flux density in the air gap etc. of the model machine and the traditional $JO_2$-62-4 type electric motor are listed as follows:

| type of machine | connection of three phase winding | each phase series wire no.Z $\phi$ 1 | $\overline{U}_1$ | $\overline{x}_1$ | $\overline{r}_1$ | $\overline{i}_0$ |
|---|---|---|---|---|---|---|
| model machine | 4 Y | 156 | 1.0 | 0.032 | 0.03 | 0.4 |
| $JO_2$-62-4 | 2 $\Delta$ | 252 | 1.0 | 0.052 | 0.025 | 0.475 |

| type of machine | $\overline{x}_m$ | $\overline{r}_m$ | $\overline{r}_2'$ | $\overline{x}_2'$ | $B_\delta$ (guass) |
|---|---|---|---|---|---|
| model machine | 2.5 | 0.125 | 0.02 | 0.161 | 11130 |
| $JO_2$-62-4 | 2.1 | 0.124 | 0.022 | 0.12 | 7620 |

The losses (normalized value), efficiency and power factor in the model machine are as follows:

(1). copper losses of stator $\overline{P}_{cm1}$ : $\overline{P}_{cm1} = \overline{i}_1^2 \cdot \overline{r}_1 = 0.05$ are calculated according to well-known conventional calculation method.

(2). copper losses of rotor $\overline{P}_{cm2}$ : $\overline{P}_{cm2} = \overline{i}_2^2 \cdot \overline{r}_2' = 0.013$ are calculated according to well-known conventional calculation method.

(3). iron losses of stator $\overline{P}_{Fe}$ : The iron magnetic circuit of the main magnetic flux of the strip steel stator and the electric power transformer are similar (both without tooth slots). Therefore, the iron losses of stator can be calculated according to the conventional calculation method of the iron losses in the transformer. As basic iron losses revision coefficient may be used K = 1.1, i.e., the same as that in the transformer, and $\overline{P}_{Fe}$ = 0.02 is calculated.

(4). stray losses $\overline{P}_Q$ : according to the calculation method of the transformer the model machine should have no stray losses (in the divisional calculation of the copper and the iron losses, the stray copper losses and the stray iron losses have been considered), here $\overline{P}_Q$ = 0.003 is still considered.

(5). Winding and friction losses $\overline{P}_{fw}$: In the model machine, the windage and friction losses are determined by referring to the real measured value of the windage and friction losses in the traditional $JO_2$ type electric motor with same rotation speed of the rotor and the same inner diameter of the stator (four poles, $D_{i1}$ = 136 mm).because the strip steel electric machine may use an air-cooling rotor for the axial ventilation with an inner fan), and the losses are enlarged appropriately according to the feature (thin and long), so $\overline{P}_{fw}$ = 0.006 is determined.

(6). total losses $\Sigma\overline{P}$ and efficiency $\eta$: according to the conventional calculation method $\Sigma\overline{P}$ = 0.092, $\eta$ = 0.916 and $\cos\phi$ = 0.846 in the model machine are calculated.

For comparison, losses (normalized value), efficiency and power factor etc. of the model machine and the traditional $JO_2$-62-4 type electric motor are listed as follows:

| type of machine | $\overline{P}_{cm1}$ | $\overline{P}_{cm1}$ | $\overline{P}_{Fe}$ | $\overline{P}_Q$ | $\overline{P}_{fw}$ |
|---|---|---|---|---|---|
| model machine | 0.05 | 0.013 | 0.02 | 0.003 | 0.006 |
| $JO_2$-62-4 | 0.041 | 0.029 | 0.028 | 0.017 | 0.009 |

| type of machine | $\Sigma\overline{P}$ | $\eta$ | $\cos\phi$ |
|---|---|---|---|
| Model machine | 0.092 | 0.916 | 0.846 |
| $JO_2$-62-4 | 0.124 | 0.891 | 0.88 |

A further embodiment of the invention is a strip steel electric machine with a three-layer end part.

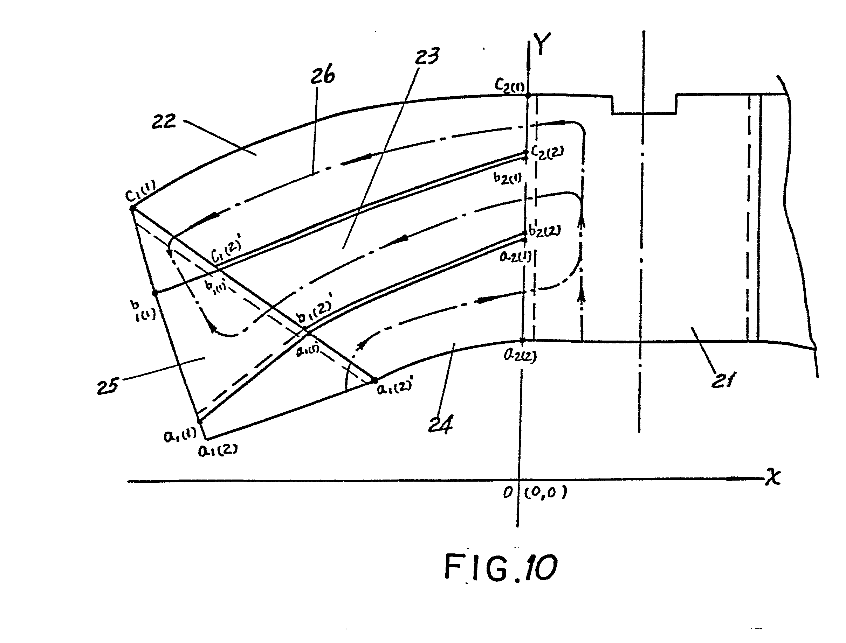

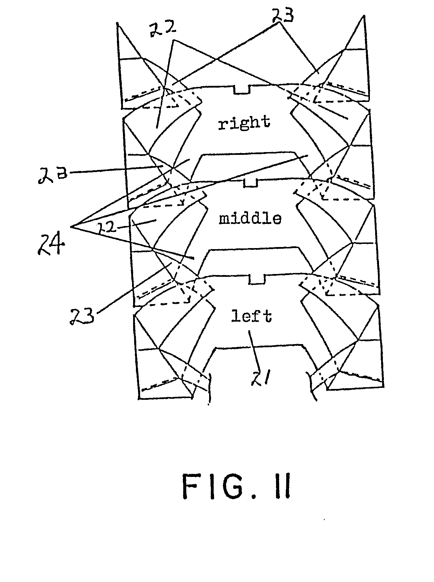

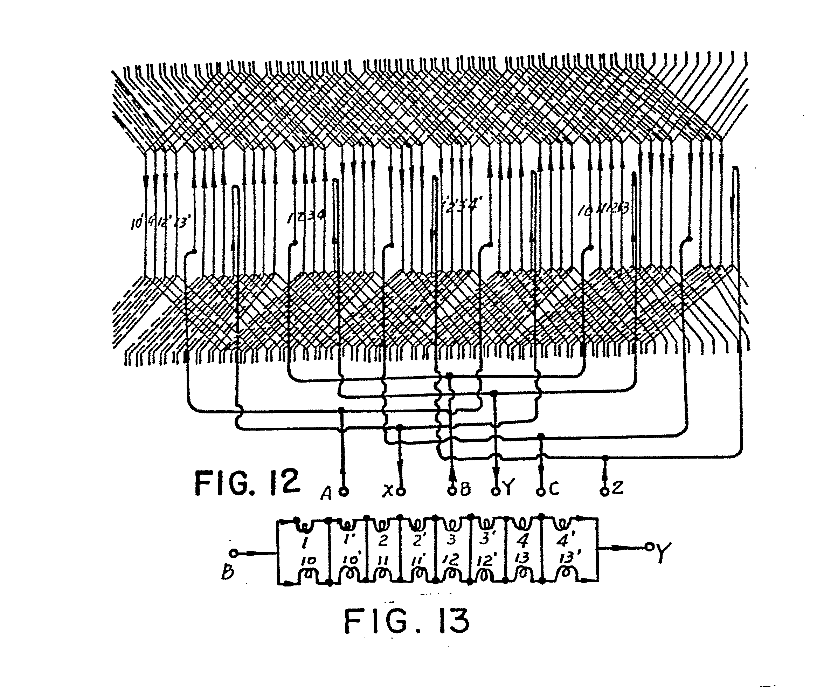

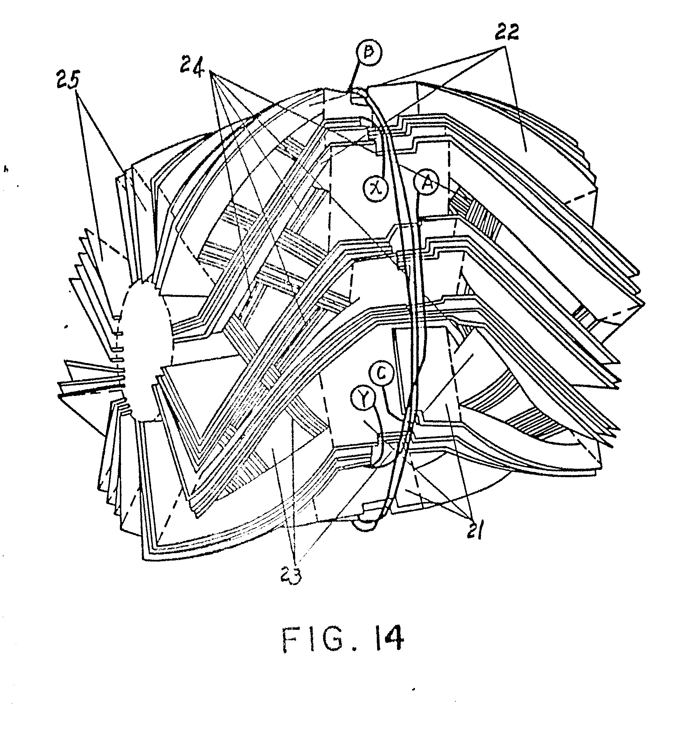

Referring to Figure 10 to 15, the half-turn strip steel coil of the stator of the strip steel electric machine with a three-layer end part is shown schematically in the Fig. 10. The installation of the hollow cylinder of the stator is similar to that of the strip steel electric machine with a two-layer end part. In the figure, the linear part is a single layer, two end parts have three layers, wherein the upper layer and the lower layer are bent to one direction with a slant, the lower edge of the lower layer is bent along the surface of the art cylinder, and the middle layer is bent to another direction with certain slant. The head portion of the upper layer end parts 22 ($C_{1(1)}$, $C_{2(1)}$ is an elliptical line, $C_{1(2)}$, $C_{2(2)}$ is a parabolic line), the middle layer end parts 23 ($b_{1(1)}$, $b_{2(1)}$ and $b_{1(2)}$, $b_{2(2)}$ both are parabolic lines), and the lower layer end parts 24 ($a_{1(1)}$, $a_{2(1)}$ is a parabolic line, $a_{1(2)}$, $a_{2(2)}$ is an elliptical line) are all provided with a connection segment. These three connection segments together form a triangle segment 25. When each connection segment meets with the corresponding end part, the segment is bent for a certain angle and positioned at the respective radial plane of the electric machine. Before the end parts of the half-turn strip steel coil are bent, a gap about of 3 mm width (i.e. at line $a_{1(1)}$ $a_{1(1)}$') is provided between the connection segments of the middle layer end part and the lower layer end part in the head triangle segment 25, and this gap is used to weld the corresponding connection segment at that place in series successively by a narrow thin segment which can conduct electricity and does not conduct magnetism, e.g. a thin copper segment according to the connection method in the Fig. 12, to form a three phase windings of the whole stip steel stator. The copper segment can provide a path for passing the electric current of the stator, but does not provide a path allowing the main magnetic flux of the stator iron magnetic circuit to pass through. The lower edge of the upper layer connection segment of the head triangle contacts with the upper edge of the corresponding middle layer connection segment through a respective thin insulating paint layer coated (the thickness of the insulating paint should be very small, e.g. each within 15 micron). In the Figure 10, the paint coating is shown as line $\overline{b_{1(1)} \, b_{1(1)'}}$. Therefore, it is insulated electrically between the upper layer end part and the middle layer end part, but the main magnetic flux of the stator iron magnetic circuit may pass through there, so that the total thickness of the insulating paint therein should be very small, e.g. within 20-30 microns. In the Fig. 10, 26 indicates the path of the main magnetic flux in the half-turn strip steel coil. Fig. 11 shows schematically the series connection of the three half-turn strip steel coils with a three-layer end part departing about one pole pitch. In the figure, three half-turn strip steel coils are designated as left, middle and right, respectively. The upper layer end part 22 and the lower layer end part 24 of the middle half-turn strip steel coil are bent to the left, and meet with the middle layer end part 23 of the left half-turn strip steel coil bent to the right through respective head connection segments. The connection segment of middle layer end part 23 and the connection segment of the lower layer end part 24 are welded together by a copper segment to form a path that conducts electricity, but does not conduct magnetism; the connection segment of the middle layer end part 23 is insulated with the connection segment of the upper layer end part 22 by the insulating paint to form a path that conducts magnetism but does not conduct electricity. These three connection segments can form a triangle positioned in a radial plane of the electric machine. Similarly, the middle layer end part 23 of the middle half-turn strip steel coil is bent to the right and meets with the upper layer end part 22 and the lower layer end part 24 of the right half-turn strip steel coil, both bent to the left. The connection of the connection segments is the same as the above-mentioned connection. Figure 12 shows the connection of the windings circuit of the strip steel stator with a three-layer end part in three phases and four poles. Fig. 13 shows the equivalent circuit of the connection circuit of phase B in the Fig. 12. Figure 14 shows schematically the practical installation of the Fig. 12. The requirement and the method of the installation of the half-turn strip steel coils with a three-layer end part to form a hollow cylinder, the cross-section of the coil, the moulding of the coil, magnetic annealing, and electrophoretic coating etc. are all the same as that in the strip steel electric machine with a two-layer end part. In the groove of the strip steel coil a positioning ring band may also be put, the groove may also be used as a leading position for the three phase leading wires. Furthermore, between the upper layer and the middle layer of the end parts and between the middle layer and the lower layer of the end parts a thin insulation sleeve may be installed, respectively. In the Fig. 12 for the end part windings the dotted line indicates the lower layer end part, the real line parallel to the dotted line indicates the upper layer end part, and the real line extending to another direction indicates the middle layer end part. The upper layer end part of the strip steel coil is not used as an electric circuit for the conduction of the electricity, but is used only for providing a yoke path for the main iron magnetic circuit. The analysis and the description of the electric circuit for the conduction of electricity consisted by the linear part, middle layer end part and the lower layer end part of the coil are the same as that in the strip steel electric machine with a two-layer end part.

The influence of the resistivity and the industrial frequency skin effect etc. of the electrically pure iron on the efficiency of the whole strip steel electric machine is also the same as that in the description of the strip steel electric machine with a two-layer end part.

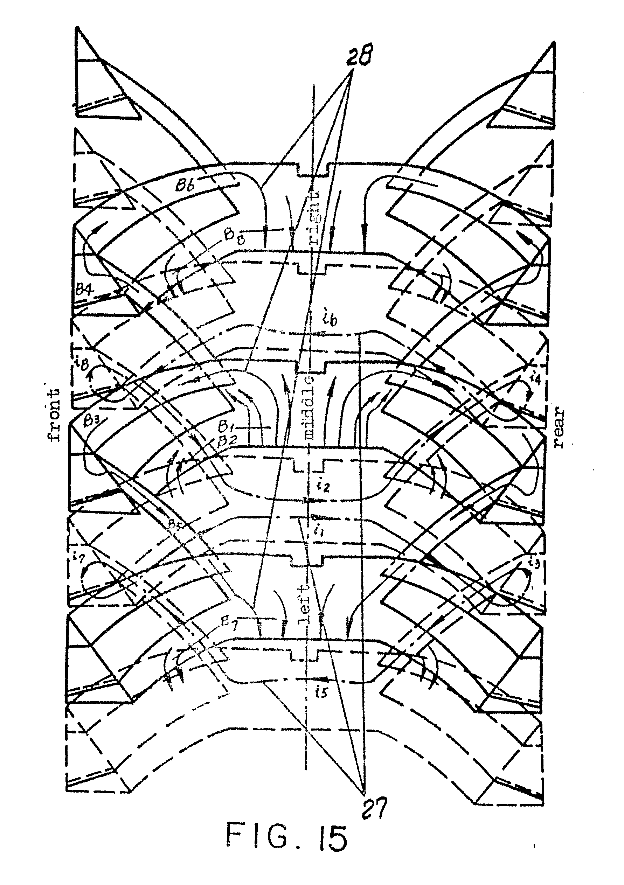

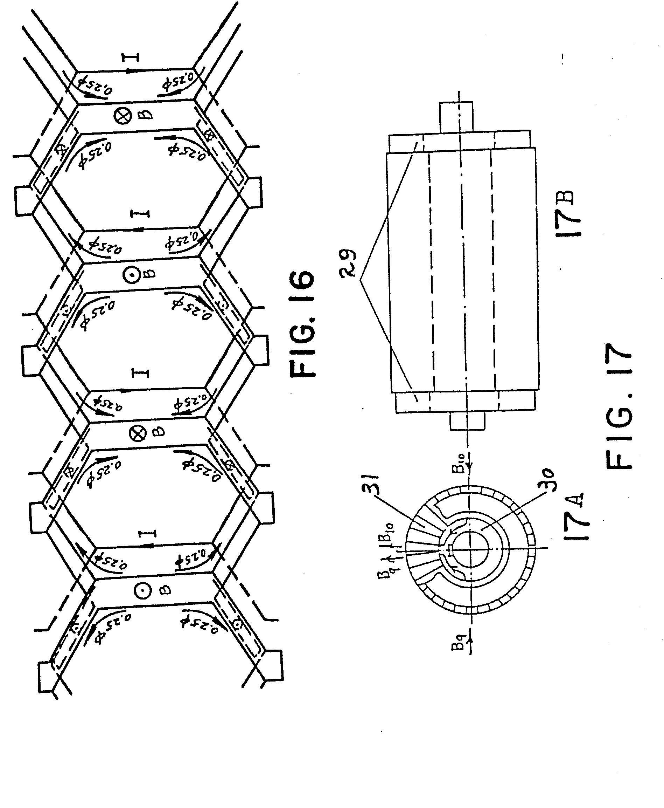

The key point of the strip steel electric machine lies on the design of the magnetic circuit. The schematic diagram of the iron magnetic circuit of the stator is shown in Fig. 15 (side view) and Fig. 16 (top view). Fig. 15 and Fig. 16 indicate the strip steel stator in side view and in top view, respectively, and only two adjacent sets of the strip steel coils are analyzed. In each set three half-turn strip steel coils are connected in series with each other and departed for about one pole pitch successively (wherein a set of coils in real line is used to indicate the main magnetic circuit of the strip steel stator, and the other set of coils in dotted line is used to indicate the current loop of the strip steel stator). In Fig. 15, owing to the fact that under the upper layer end part winding and the middle layer end part winding (real line) the other adjacent current-carrying middle layer end part winding and lower layer end part winding (dotted line) are passed (in the fiugre, the travel and the direction of the current-carrying loop is $i_1$ $i_3$ $i_5$ $i_7$ and $i_2$ $i_4$ $i_6$ $i_8$). Therefore, according to the right hand rule, the main magnetic circuit of the middle half-turn strip steel coil should be a pair of parallel branches symmetric about the middle line of the linear part, and the front half part and the rear half part are symmetric with each other. Thus, only an analysis of the front half part is needed as an example. After the air gap main magnetic flux is passed from the linear part and the lower layer end part coil of the front half part of the middle half-turn strip steel coil, the main magnetic flux is divided into a left branch and a right branch wherein for the left branch the main magnetic flux enters to the middle layer end part coil of the front half part of the left half-turn coil from the upper end part coil of the front half part of the middle half-turn coil, then enters into the linear part and the lower layer end part coil of the front half part of the left half-turn coil and then enters into the strip steel rotor through the main air gap, then passes through the iron magnetic circuit in the strip steel rotor and after one pole pitch has been crossed, passes the main air gap again, then enters into the linear part and the lower layer end part coil of the front half part of the middle half-turn coil to form a closed main magnetic circuit. In the figure the travel and the direction of the closed magnetic circuit of the main magnetic flux is $B_1$ $B_3$ $B_5$ $B_7$ $B_9$ $B_1$ ($B_9$ is in the strip steel rotor in the Fig. 17). For the right branch the main magnetic flux enters from the middle layer end part coil of the front half part of the middle half-turn coil into the upper layer end part coil of the front half part of the right half-turn coil, then enters continually into the linear part and the lower layer end part coil of the front half part of the right half-turn coil and then enters the strip steel rotor through the main air gap, then passes through the iron magnetic circuit and after one pole pitch has been crossed, passes through the air gap again and then enters into the linear part and the lower layer end part coil of the front half part of the middle half-turn coil to form a closed main magnetic circuit. In the figure, the travel and the direction of the closed magnetic circuit of the main magnetic flux is $B_2$ $B_4$ $B_6$ $B_8$ $B_{10}$ $B_2$ ($B_{10}$ is in the strip steel rotor in the Fig. 17).

According to the reasonable distribution of the whole iron magnetic circuit of the strip steel stator, every portion should satisfy the design idea of the main magnetic circuit and a set of corresponding design formulas for the test and calculation of magnetic circuit to assure to provide a reasonable iron magnetic path for the main magnetic flux.

(1). The magnetic flux density $B_\delta$ of the air gap passing in and out the lower layer end part (tooth) should be able to pass through the assembly for passing in and out at the lower layer end part (height $h_{a2}$ i.e. $\overline{a_{2(1)} \ a_{2(2)}}$ at that place to be determined) according to the predetermined magnetic flux density $B_{a2}$.

(2). The magnetic flux density at the assembly for passing in and out the middle and upper layer end part at the linear part should be able to pass through that place with the predetermined magnetic flux density $B_{0bc}$ (at that place the axial length $l_0$ i.e. half length of the linear part to be determined).

(3). A quarter of the main magnetic flux for each pole should be able to pass through the place passing in and out at the head end and the tail end of the middle layer end part according to the predetermined magnetic flux density $B_{fb1}$ and $B_{fb2}$ respectively (at that places heigth $h_{b1}$ i.e. $\overline{a_{1(1)} \ b_{1(1)}}$ in the Fig. 10 and $h_{b2}$ i.e. $\overline{b_{2(1)} \ b_{2(2)}}$ in the Fig. 10 to be determined).

(4). The main magnetic flux, which is the same as that in the middle layer end part in magnitude should be able to pass through the places for passing in and out at the head end and the tail end of the upper layer end part according to the predetermined magnetic flux density $B_{fc1}$ and $B_{fc2}$ (at that place height $h_{c1}$ i.e. $\overline{b_{1(1)} \ c_{1(1)}}$ in the Fig. 10 and $h_{c2}$ i.e. $\overline{c_{2(1)} \ c_{2(2)}}$ in the Fig. 10 to be determined).

(5). On the condition that one end of the lower end part is higher (in general $h_{a1}$ i.e. $\overline{a_{1(1)} \ a_{1(2)}}$ in Fig. 10 may be designed as 10 mm), the same magnitude of the main magnetic flux should pass through the places with the height $h_{b1}$ and and $h_{c1}$ to be determined by the same magnetic flux density (i.e. $B_{fb1} = B_{fc1}$), respectively.

(6). The height (i.e. $h_{a1}$, $h_{b1}$, $h_{c1}$ and $h_{a2}$, $h_{b2}$, $h_{c2}$) of the head end and the tail end of the upper layer end part, middle layer end part and lower layer end part to be determined should have equal sums.

Let $B_\delta$, $B_{a2}$, $B_{0bc}$, $B_{fb2}$, $B_{fc2}$, $h_{a1}$ the design inner diameter of the strip steel stator $R_{i1}$, the lamination factor between segments of the stator $K_{Fe1}$, the wave amplitude coefficient of the main magnetic flux $F_s$ etc. be the predetermined parameters determined before the design, then a set of design formulas (simplified slightly) according to the above-mentioned design ideas are as follows:

$$\frac{\sqrt{2} \cdot (R_{i1} + h_{a2} + h_{b2} + h_{c2} + 4) \cdot R_{i1} \cdot B_\delta}{F_s} = K_{Fe1}(2 R_{i1} + h_{a2}) \cdot h_{a2} \cdot B_{a2} \quad \ldots (4)$$

$$\frac{[\vert_0 + \frac{\sqrt{2}}{2} \cdot (R_{i1} + h_{a2} + h_{b2} + h_{c2} + 4)] \cdot R_{i1} \cdot B_\delta}{F_s} = K_{Fe1} \cdot \vert_0 \cdot (R_{i1} + h_{a2}) \cdot B_{0bc} \quad (5)$$

$$\frac{[\vert_0 + \frac{\sqrt{2}}{2} (R_{i1} + h_{a2} + h_{b2} + h_{c2} + 4)] \cdot R_{11} \cdot B_\delta}{F_s} =$$

$$= K_{Fe1} \cdot \frac{\sqrt{2}}{2} (2 R_{i1} + 2h_{a2} + h_{b2} + 4) \cdot h_{b2} \cdot B_{fb2} \quad \ldots \ldots \ldots (6)$$

$$(2 R_{i1} + 2h_{a2} + h_{b2} + 4) \cdot h_{b2} = (2 R_{i1} + 2h_{a2} + 2h_{b2} + h_{c2} + 8) \cdot h_{c2} \quad \ldots (7)$$

$$(2 R_{i1} + 2h_{a1} + h_{b1} + 4) \cdot h_{b1} = (2 R_{i1} + 2h_{a1} + 4 + 2h_{b1} + h_{c1} + 4) \cdot h_{c1} \quad \ldots (8)$$

$$h_{a1} + h_{b1} + h_{c1} + 4 = h_{a2} + h_{b2} + h_{c2} + 4 \quad \ldots \ldots \ldots \ldots \ldots (9)$$

When the strip steel electric machine with a three-layer end part is an electric motor, its squirrel-cage strip steel rotor may be shown as in Fig. 17 (in the figure $B_9$ and $B_{10}$ show schematically the path and the direction of the closed magnetic circuit of the main iron magnetic flux of the strip steel electric machine passing through the strip steel motor). Is structure, requirement and the method, etc. are the same as that in the description of the strip steel electric machine with a two-layer end part. Obviously, the rotor of the motor may also use a wire-wound strip steel rotor with an electric circuit and a magnetic circuit mixed as a whole.

When the strip steel electric machine with a three-layer end part is a generator, its structure, requirement and method etc. are the same as that in the description of the strip steel electric machine with a two-layer end part. Obviously, the rotor of the generator may use not only a type of rare-earth cobalt permanent magnet, but also a strip steel coil magnetic pole (magnetic field excited by direct current) rotor with an electric circuit and a magnetic circuit mixed as a whole.

The strip steel electric machine with a three-layer end part for an electric circuit and a magnetic circuit mixed as a whole may be embodied through the following embodiment (simplified as model machine example).

This model machine example is designed in comparison with the traditional electric machine $JO_2$-82-4 (40 KW). The windings of the strip steel stator with a three-layer end part are connected in three phases and 4 Δ (number of the parallel branches a = 4). The whole stator consists of 18 strip steel coil elements, in each phase and under each pair of poles three coil elements are connected in series to form a pair of parallel branches. Four parallel branches in each phase are formed by parallel connection between two pairs of poles, the number of turns of the strip steel coil series connected for each branch in each phase is $W_1 = 60$ turns.

The predetermined parameters selected according to the reasonable distribution of the whole iron magnetic circuit of the strip steel stator are:

$R_{i1}$ = 136 mm, $ha_1$ = 10 mm. $K_{Fe1}$ = 0.8, $F_s$ = 1.4,
$B_\delta$ = 10100 gauss, $B_{a2}$ = $B_{0bc}$ = 18000 gauss,
$B_{fb2}$ = $B_{fc2}$ = 16000 gauss.

Substituting the above predetermined parameters into the design formulas,
$h_{a2}$ = 48 mm, $h_{b2}$ = 36.5 mm, $h_{c2}$ = 29 mm, $h_{b1}$ = 61.8 mm,
$h_{c1}$ = 41.7 mm, $l_0$ = 54 mm are obtained.

Furthermore, $B_{fb1}$ = $B_{fc1}$ = 11700 gauss.

$$B_{fb} = \frac{B_{fb1} + B_{fb2}}{2} = B_{fc} = \frac{B_{fc1} + B_{fc2}}{2} = 13900 \text{ gauss}$$

may be obtained.

The schematic diagram of the half-turn coil is shown in Fig. 10.

Now the main dimensions and main materials of this model machine example and the traditional JO-82-4 type electric motor for comparison are listed respectively as follows:

| Type of machine | Capacity (KW) | Outer dia. of stator core $D_a$ (mm) | Effective length of core (including end part windings) L (mm) | Inner dia. of stator core $D_{i1}$ (mm) | length of air gap δ (mm) |
|---|---|---|---|---|---|
| model machine | 40 | ∅ 371 | 370 | ∅ 136 | 0.4 |
| $JO_2$-82-4 | 40 | ∅ 368 | 465 | ∅ 245 | 0.65 |

| Main material wasted | $JO_2$-82-4 | model machine example | special high efficiency example (described later ) |
|---|---|---|---|
| copper (kg) | 24,4 | 0 | 10 |
| iron (kg) | 278 | 250 | 250 |

The parameters (normalized) of the T-type equivalent electric circuit of the model machine example (Fig. 9) are as follows:

(1). $\bar{r}_1$: According to the simulated real measured value $\bar{r}_1 = 0.014$ is calculated in the model machine example.

(2). $\bar{r}_{2'}$: According to the simulated real measured value and let $K_A = 1$ (because the rotor has no skin effect), $\bar{r}_{2'} = 0,023$ is calculated in the model machine example.

(3). $\bar{X}_1$: According to the calculation formula of the leakage reactance tested and proved by the simulated real measurement, $\bar{X}_1 = 0.025$ is calculated in the model machine example.

(4). $\bar{X}_2'$ : According to the calculation formula of the leakage reactance tested and proved by the simulated real measurement (the leakage reactance of the strip steel rotor and the rotor of the traditional $JO_2$ type electric motor are substantially same), $\bar{X}_2' = 0.166$ is calculated.

(5). $\overline{I}_0$: According to the calculation formula of the magnetic circuit tested and proved by the simulated real measurement, $\overline{I}_0 = 0.408$ is calculated in the model machine example.

(6). $\overline{X}_m$: According to $\overline{X}_m = \dfrac{1}{\overline{I}_0} = 2.451$

(7). $\overline{r}_m$: In the model machine example according to the conventional calculation method of the iron losses (the correctness has been rpoved by long term practice, so that test and proof are not needed), the iron losses of the stator is $\overline{P}_{Fe} = 0.024$, therefore

$$\overline{r}_m = \frac{\overline{P}_{Fe}}{\overline{I}_0^2} = 0.144$$

The parameters of the T-type equivalent electric circuit and the magnetic flux density of the air gap of the model machine example and the traditional $JO_2$-82-4 type electric motor for comparison are listed as follows:

| type of machine | connection of 3 phase winding | each phase series wire no. $Z_{\phi 1}$ | $\overline{U}_1$ | $\overline{X}_1$ | $\overline{r}_1$ | $\overline{I}_0$ | $\overline{X}_m$ |
|---|---|---|---|---|---|---|---|
| model machine | 4 $\Delta$ | 120 | 1.0 | 0.025 | 0.014 | 0.408 | 2.451 |
| $JO_2$-82-4 | 2 $\Delta$ | 176 | 1.0 | 0.072 | 0.019 | 0.248 | 4.03 |

| type of machine | $\overline{r}_m$ | $\overline{r}'_2$ | $\overline{x}'$ | $B_\delta$ (gauss) |
|---|---|---|---|---|
| model machine | 0.144 | 0.023 | 0.166 | 10100 |
| $JO_2$-82-4 | 0.293 | 0.0124 | 0.146 | 5500 |

From the point of view of the physical essentials, the reasonableness for the comparison of the parameters in the above table may be examined and proved as follows:

As above-mentioned, the substantial features of the strip steel electric machine with an electric circuit and a magnetic circuit mixed as a whole in comparison with the $JO_2$ type traditional electric machine are, that the main magnetic flux of the air gap of the former is increased greatly, in the view of the effect in physical essentials it should be equivalent to a big increase of the voltage. Accordingly, from the above table for comparison parameter $B_\delta$ is increased nearly by 100 %, $Z_{\phi 1}$ and $\bar{r}_1$ have relative great decrease, and the exciting current $\bar{I}_0$ has relative great increase in the model machine example (under the condition of $\bar{U}_1 = 1$, the respective $\bar{X}_m$ should be nearly in reverse proportion to $\bar{I}_0$) etc., all as as expected. Therefore, it results that the power factor (0.856) in the model machine example will be lower than the power factor (0.9) of the traditional $JO_2$-82-4 type motor. This may be a weak point of the strip steel electric machine with the electric circuit and the magnetic circuit mixed as a whole. But owing to the fact that the electric current density of the windings designed is very low ($\Delta_1 = 0.38$ A/mm²), if necessary, it can be increased. Then the power factor may be improved correspondingly and the rated capacity of the electric motor will also be increased.

In the table for comparison $\bar{X}_1$ in the model machine example is only one third of that in the traditional $JO_2$-82-4 type electric motor. This is mainly due to the fact that the leakage magnetism of the slots in the traditional electric machine is a lumped leakage magnetic linkage, $\bar{X}_1$ in the traditional electric motor is proportional to the square of the number of the wires connected in series in each slot, while in the coil of the strip steel electric machine the leakage is an evenly distributed stray leakage magnetic linkage, $\overline{X}_1$ in the strip steel electric machine is only proportional to the number of wires connected in series in each phase. Secondarily, this is also due to the fact that $Z_{\phi 1}$ in the strip steel electric machine has a great decrease, and the slot leakage magnetism in the stator of the strip steel electric machine has two slot openings, an upper one and a lower one, while only one slot opening is in the traditional JO-82-4 type electric machine.

The resistance $\overline{r}'_2$ of the strip steel rotor in the model machine example has a great increase in comparison with that of the rotor in the traditional $JO_2$-82-4 type electric motor. This is mainly due to the fact that the total length (370 mm) in the former has a great increase in comparison with the total length (275 mm) in the latter.

The losses (normalized value), efficiency and the power factor in the model machine example are as follows:

(1). copper losses of stator $\overline{P}_{cm1}$: According to the well-known conventional calculation method, $\overline{P}_{cm1}= \overline{I}^2 \cdot \overline{r}_1 = 0.0224$ is calculated.

(2). copper losses of rotor $\overline{P}_{cm2}$: According to the well-known conventional calculation method, $\overline{P}_{cm2} = \overline{I}_2^2 \cdot \overline{r}'_2 = 0.0285$ is calculated.

(3). iron losses of stator $\overline{P}_{Fe}$: the iron magnetic circuit of the main magnetic flux of the strip steel stator and the power transformer are the same (without tooth slots). Therefore, the iron losses of the stator may be calculated according to the conventional calculation method of the iron losses in the transformer. As in a transformer, the basic iron losses revision coefficient K = 1.1 is adopted,

so $\overline{P}_{Fe}$ = 0.024 is calculated.

(4). stray losses $\overline{P}_Q$: According to the calculation method in the transformer, no such losses appear in the model machine example (the stray copper and iron losses have been considered in the divisional calculation of the copper losses and the iron losses), but here $\overline{P}_Q$ = 0.0025 is still adopted.

(5). windage and friction losses $\overline{P}_{fw}$: In the model machine example the windage and friction losses are determined by referring to the real measured value of the windage and friction losses in the traditional $JO_2$ type electric motor with the same rotation speed of the rotor and the same inner diameter of the stator (four poles, $D_{i1}$ = $\phi$ 136 mm), because the strip steel electric machine may use an air-cooling rotor for axial ventilation with an inner fan and the losses are enlarged appropriately according to the feature (thin and long), so $\overline{P}_{fw}$ = 0.005 is determined.

(6). total losses $\Sigma\overline{P}$ and efficiency $\eta$: According to the well-known conventional calculation method, $\Sigma\overline{P}$ = 0.0824, $\eta$ = 0.924 and $\cos\phi$ = 0.856 in the model machine example are calculated.

For comparison, parameters are listed as follows:

| type of machine | $\overline{P}_{cm1}$ | $\overline{P}_{cm2}$ | $\overline{P}_{Fe}$ | $\overline{P}_Q$ | $\overline{P}_{fw}$ | $\Sigma\overline{P}$ | $\eta$ | $\cos\phi$ |
|---|---|---|---|---|---|---|---|---|
| model machine | 0.0224 | 0.0284 | 0.024 | 0.0025 | 0.005 | 0.0824 | 0.924 | 0.856 |
| $JO_2$-82-4 | 0.028 | 0.016 | 0.018 | 0.0241 | 0.013 | 0.0991 | 0.91 | 0.9 |

In view of the above strip steel electric machines with a two-layer end part and with a three-layer end part for an electric circuit and a magnetic circuit mixed as a whole, it is proved that these machines have significant features, such as small in volume, large in capacity, high in efficiency and economical in the effective copper material. Furthermore, because the heat dissipative area of the coil of the strip steel stator is far bigger than that of the copper coil in the traditional electric machine for many times, while the heat load in the conduction of electricity is smaller for many times (e.g. in the model machine example with three-layer end part the heat load $A \cdot \Delta_1 = 142$, while in the traditional $JO_2$-82-4 type electric machine the heat load $A \cdot \Delta_1 = 1345$), therefore the stator of the strip steel electric machine for an electric circuit and a magnetic circuit mixed as a whole has great potential in the load capacity, the overload capacity in a short time for the strip steel electric machine is far stronger than that in the traditional electric machine, the service life for strip steel electric machine is far longer than that of the traditional electric machine. At last, owing to the fact that the inner circle surface of the stator and the outer circle surface of the rotor are nearly a smooth surface, so a set of the disadvantages formed by the tooth harmonics in the traditional electric machine such as additional torque, vibration noise, Carter's coefficient in the air gap, especially the stray copper and iron losses (an important factor for forming high efficiency in the strip steel electric machine) etc. are eliminated.

A third embodiment of the strip steel electric machine for an electric circuit and a magnetic circuit mixed as a whole having a particularly high efficiency is provided according to the invention.

From tables for comparison in the specification, where respective losses and efficiency of the model machine having a two-layer end part and a three-layer end part are listed, it is found that in the total losses $\Sigma\overline{P}$ the copper losses of the strip steel stator $\overline{P}_{cm1}$ and the copper losses of the strip steel rotor $\overline{P}_{cm2}$ occupy an important proportion, it is formed mainly with the high resistivity of the electrically pure iron. Therefore, if a good conducting layer, e.g. copper is coated on the surfaces of the strip steel segment of the stator and the rotor at first for about 0.5-1 micron in thickness before the electrophoretic coating, then the resistivity of the pure iron segment of the stator and the rotor and the corresponding copper losses will decrease in a great amplitude, so that the efficiency of the strip steel electric machine with a two-layer end part and a three-layer end part will increase more than 5 % in comparison with the traditional $JO_2$ type electric motor. Under the tendency that the most effective usage of the energy source is the most important aim to seek for high economical benefit in the modern world, obviously the disclosure of the strip steel electric machine with an electric circuit and a magnetic circuit mixed as a whole having specially high efficiency will have great significance.

Claims:

1. An electric machine, characterized in that the winding of the said electric machine is wound by a strip steel, and said windings are not only electrically conducting windings but also the magnetically-conducting iron core of the said electric machine.

2. An electric machine according to claim 1, characterized in that the stator of the said electric machine comprises a plurality of half-turn strip steel coils with substantially identical shape and dimension, the bottom of the said strip steel coils is arranged in order along the inner cylindrical surface of the said stator and laminated, and said coils are cast and solidified by resin to form a hollow stator cylinder.

3. An electric machine according to claim 2, characterized in that said half-turn strip steel coil is a strip steel coil having a two-layer end part, the linear part (1) of the said strip steel coil is a single layer, the end part of the said strip steel coil has two layers (2, 3), the connection segments (4) are provided at the head of the end parts respectively, the first layer end part of each one half-turn strip steel coil bent to one direction is connected successively with the second layer end part of the other half-turn strip steel coil, which is departed from the said one half-turn strip steel coil for substantially a pole pitch, bent to the other direction by a thin iron segment through respective head connection segments electrically and magnetically .

4. An electric machine according to claim 2, characterized in that said half-turn strip steel coil is a strip steel coil having a three-layer end part, the linear part of the said strip steel coil is a single layer, the end part of the said strip steel coil has three layers with respective head connection segments at the head, the first layer end part and the third layer end part of each one half-turn strip steel coil bent to one direction met through head connection segments successively with the second layer end part of the other half-turn strip steel coil, which is departed from the said one half-turn strip steel coil for substantially one pole pitch, bent to the other direction, between the head connection segment of the first layer end part and the head connection segment of the second layer end part is an electrically insulation contact, and the head connection segment of the second layer end part is connected with the head connection segment of the third layer end part by a connection means which conducts electricity but does not conduct magnetism.

5. An electric machine according to claim 2, characterized in that between said head connection segment of the second layer end part and said head connection segment of the third layer end part, a gap is remained and a metal segment which conducts electricity and does not conduct magnetism is connected across to form a connection means which conducts electricity and does not conduct magnetism.

6. An electric machine according to claim 2, characterized in that the cross-section of said half-turn strip steel coil has the shape required for its location in the hollow cylinder of the stator.

7. An electric machine according to claim 2, characterized in that when said electric machine is a squirrel-cage induction motor, the rotor of the electric machine comprises a yoke portion formed by a plurality of ring iron segments passing into the rotational axle: a hollow clyindrical portion formed by a plurality of the iron segments with the cross-section substantially trapezoidal, arranged in the axial direction of the outer cylindrical surface of said yoke portion, and laminated along the circumferal direction: two end ring portions located at two ends of the said hollow cylindrical portion to form an end ring portion having good electrical conductivity between the trapezoidal iron segments.

8. An electric machine according to claim 2, characterized in that when said electric machine is a wire-wound induction motor, the rotor of the motor is a wire-wound strip steel rotor with an electric circuit and a magnetic circuit mixed as a whole.

9. An electric machine according to claim 2, characterized in that when said electric machine is a generator, the rotor of the generator is in type of rare-earth cobalt permanent magnet.

10. An electric machine according to claim 2, characterized in that when said electric machine is a generator, the rotor of the generator is a magnetic pole (magnetic field excited by direct current) rotor wound by the strip steel coil with an electric circuit and a magnetic circuit mixed as a whole.

11. An electric machine according to any of claims 1 to 10, characterized in that said material of the strip steel is an electrically pure iron.

12. An electric machine according to any of claims 1 to 10, characterized in that an electrically good conducting metal layer is coated at the surface of the strip steel.

13. An electric machine according to claim 12, characterized in that said electrically good conducting metal layer is copper.

FIG. I

FIG. 2

FIG. 3

FIG. 4

FIG. 5

FIG. 6

FIG. 7

7A

7B

FIG. 8

FIG. 9

FIG.10

FIG. II

FIG. 12

FIG. 13

FIG. 14

FIG. 15

FIG. 16

17A

17B

FIG. 17